# EUROPÄISCHE PATENTSCHRIFT

(11) **EP 2 337 950 B1**
(45) Veröffentlichungstag und Bekanntmachung des Hinweises auf die Patenterteilung: **13.05.2015**
(21) Anmeldenummer: 09778455.7
(22) Anmeldetag: 10.09.2009
(51) Int. Cl.: F03D 1/06

(54) **PROFIL EINES ROTORSBLATTS UND ROTORBLATT EINER WINDENERGIEANLAGE**
PROFILE OF A ROTOR BLADE AND ROTOR BLADE OF A WIND POWER PLANT
PROFIL D'UNE PALE DE ROTOR ET PALE DE ROTOR D'UNE ÉOLIENNE

(30) Priorität: 23.10.2008 DE 102008052858
(43) Veröffentlichungstag der Anmeldung: 29.06.2011
(73) Patentinhaber: Senvion SE, 22297 Hamburg (DE)
(72) Erfinder: PETSCHE, Marc, 24809 Nübbel (DE); KORJAHN, Matthias, 24358 Bistensee (DE); GOLLNICK, Bert, 15517 Fürstenwalde (DE)
(74) Vertreter: Seemann, Ralph
(86) Internationale Anmeldenummer: PCT/EP2009/006574
(87) Internationale Veröffentlichungsnummer: WO 2010/046000

(56) Entgegenhaltungen:
- EP-A1- 1 845 258
- WO-A1-2009/068719
- DE-A1- 2 829 716
- DE-A1- 3 640 780
- DE-A1- 10 307 682
- DE-A1-102008 003 411
- GB-A- 2 265 672
- STANDISH K J: "Aerodynamic Analysis of Blunt Trailing Edge Airfoils", JOURNAL OF SOLAR ENERGY ENGINEERING, ASME INTERNATIONAL, US, Bd. 125, 1. Oktober 2003 (2003-10-01), Seiten 479-488, XP008131212, ISSN: 0199-6231, DOI: DOI:10.1115/1.1629103
- FUGLSANG P ET AL: "DEVELOPMENT OF THE RISO WIND TURBINE AIRFOILS", WIND ENERGY, WILEY, CHICHESTER, GB, Bd. 7, Nr. 2, 1. Januar 2004 (2004-01-01), Seiten 145-162, XP008068651, ISSN: 1099-1824, DOI: DOI:10.1002/WE.117

## Beschreibung

Die Erfindung betrifft ein Profil eines Rotorblatts einer Windenergieanlage, eine Mehrzahl derartiger Profile sowie ein entsprechendes Rotorblatt einer Windenergieanlage.

Aus DE 10 2008 003 411 A1 ist ein entsprechendes Profil eines Rotorblatts einer Windenergieanlage sowie eine entsprechende Familie bzw. eine Mehrzahl von Profilen bekannt. Die in dieser Schrift offenbarten Flügelprofile bzw. Profile weisen eine stumpfe Hinterkante auf, eine im Wesentlichen ovale Saugseite und eine im Wesentlichen S-förmige Druckseite.

Es sind auch weitere Profile bekannt. Insbesondere sind auch Niedriggeschwindigkeitsprofile bekannt, die in der Nähe der Rotorblattwurzel bzw. in der Nähe der Nabe der Windenergieanlage verwendet werden.

Aus Dieter Althaus "Niedriggeschwindigkeitsprofile", Friedr. Vieweg & Sohn Verlagsgesellschaft mbH, Braunschweig/Wiesbaden, 1996, ist ein bekanntes Profil mit niedriger relativer Dicke dadurch hergestellt, dass ein an sich bekanntes Profil durch Abschneiden der Hinterkante oder Hochskalieren in der Dicke auf die erforderlichen relativen Dickenwerte, die in der Nähe der Blattwurzel benötigt werden, erreicht wird. Als Beispiel kann hierzu das FX 77-W-500 genannt werden, das auf den Seiten 162 bis 163 in diesem genannten Buch offenbart ist. Dieses Profil erreicht bei einer Reynoldszahl von 2,75 Mio. im sauberen Zustand einen maximalen Auftriebsbeiwert von cₐ = 1,6 bei einem Anstellwinkel von 10° und im verschmutzten, also turbulenten Zustand ein maximales cₐ von 0,8 bei einem Anstellwinkel von 4°. Das FX 77-W-500 hat eine relative Profildicke von 50%.

Unter Anstellwinkel bzw. Anströmwinkel wird im Rahmen der Erfindung ein Winkel des anströmenden scheinbaren Windes zu der Sehne des Profils verstanden. Für etwaige Definitionen wird insbesondere auf das Lehrbuch Erich Hau "Windkraftanlagen", 4. Auflage, 2008, insbesondere Seite 126 f., verwiesen.

Bekannte Profile mit hoher relativer Profildicke, wie beispielsweise das FX 77-W-500, besitzen zwar im sauberen Zustand einen akzeptablen Auftriebsbeiwert cₐ, der maximale Auftriebsbeiwert bricht aber deutlich bei turbulenter Umströmung, also im verschmutzten Zustand, ein. Auch ändert sich der aerodynamische Anstellwinkel, bei dem der maximale Auftriebsbeiwert im verschmutzten Zustand erreicht wird, deutlich. Dieses Verhalten, nämlich der kleine Auftrieb bei Verschmutzung mit einer großen Anstellwinkeländerung für den maximalen Auftriebsbeiwert ist für Windkraftanlagen sehr ungünstig. Wird als Auslegungsanstellwinkel, also der Anstellwinkel, der in der Auslegung des Rotorblattes bei der Berechnung des jeweiligen Profils verwendet wird, der Winkel oder ein etwas kleinerer Winkel gewählt, bei dem das saubere Profil den maximalen Auftriebsbeiwert besitzt, was sinnvoll ist, da die Blatttiefen klein gehalten werden sollen, verringert sich der Auftriebsbeiwert dann im verschmutzten Zustand auf einen Bruchteil des sauberen Wertes. Das Profil des FX 83-W-500 hat durch die dicke Hinterkante schon bei laminarer Umströmung nur mäßige aerodynamische Eigenschaften. Bei turbulenter Umströmung weist es noch hohe Auftriebsbeiwerte auf, hat dann aber relativ schlechte Gleitzahlen. Außerdem ist die maximale Dicke dieses Profils bei ungefähr 80% der Profillänge bzw. Sehnenlänge, was strukturell für einen guten Straak des Rotorblatts weniger förderlich ist. Damit kann nur ein relativ geringer Abstand der Hauptgurte bei einem Blatt mit dem Profil des FX 83-W-500 hergestellt werden, was entsprechende Abstriche bei der Baubarkeit und dem Blattgewicht eines Rotorblatts hervorruft.

In den Druckschriften GB 2 265 672 A, Standish K.J.: "Aerodynamic Analysis of Blunt Trailing Edge Airfoils", Journal of Solar Energy Engineering, ASME International, DOI: 10,1115/1.1629103, DE 28 29 716 A1, DE 36 40 780 A1, EP 1 845 258 A1 und Fuglsang P. et al.: "Development of the Risø Wind Turbine Airfoils", Wind Energy, DOI: 10.1002/WE.117 sind verschiedene Profile von Rotorblättern bzw. Flügeln dargestellt.

Es ist Aufgabe der vorliegenden Erfindung, ein Profil eines Rotorblatts einer Windenergieanlage anzugeben und entsprechend eine Mehrzahl von Profilen sowie ein entsprechendes Rotorblatt, das gute aerodynamische Eigenschaften sowohl bei laminaren als auch turbulenten Strömungen erreicht. Hierbei soll insbesondere auch das Blattgewicht minimiert werden.

Gelöst wird diese Aufgabe durch ein Profil eines Rotorblatts einer Windenergieanlage mit einer Oberseite (Saugseite) und einer Unterseite (Druckseite) mit einer Skelettlinie und einer Sehne zwischen der Vorderkante und der Hinterkante des Profils, wobei die Skelettlinie wenigstens abschnittsweise unterhalb der Sehne in Richtung der Druckseite verläuft, wobei die Skelettlinie in einem Abschnitt zwischen 0 % bis 60 % der Profiltiefe des Profils unterhalb der Sehne angeordnet ist, wobei die Skelettlinie vollständig in einem Abschnitt zwischen 5 % bis 50 %, insbesondere 2 % bis 60 %, unterhalb der Sehne angeordnet ist, wobei das Profil eine relative Profildicke von mehr als 49% aufweist, wobei die Dickenrücklage kleiner als 35% ist.

Durch diese Maßnahme kann bei dem erfindungsgemäßen Profil ein hoher Anstellwinkel gewählt werden, wobei ein hoher Auftriebsbeiwert und eine hohe Gleitzahl erreicht werden kann. Hierdurch kann die Verwindung eines mit einem derartigen Profil versehenen Rotorblattes bzw. einer Familie oder einer Mehrzahl von Profilen versehenen Rotorblattes klein gehalten werden, so dass ein möglichst großer Abstand der Hauptgurte ohne eine Verdrehung der Hauptgurte erreicht werden kann und damit das Rotorblattgewicht reduziert wird.

Dadurch, dass die Skelettlinie in einem Abstand zwischen 0 % bis 60 %, insbesondere 0 % bis 50 %, der Profiltiefe des Profils unterhalb der Sehne angeordnet ist, ist ein Profil mit sehr guten aerodynamischen Eigenschaften für eine Windenergieanlage möglich.

Dadurch, dass die Skelettlinie vollständig in einem Abschnitt zwischen 5 % bis 50 %, insbesondere 2 % bis 60 %, unterhalb der Sehne angeordnet ist, ist die Auslegung des Profils auch zu niedrigeren Reynoldszahlen relativ unproblematisch.

Vorzugsweise ist der Betrag der maximalen Wölbung kleiner als 0,015, also 1,5%. Die Wölbung ist hierbei der Abstand der Skelettlinie zur Sehne in Prozent der Sehnenlänge. Die maximale Wölbung ist somit für das gegebene Profil der größte Abstand der Skelettlinie zur Sehne in Prozent der Sehnenlänge. Die Skelettlinie ist im Rahmen der Erfindung die Linie der Mittelpunkte der zwischen der Profilober- und -unterseite eingeschriebenen Kreise. Die Sehne ist im Rahmen der Erfindung definiert als die Linie von der Mitte der Hinterkante des Profils zum weitest entfernten Profilpunkt, was dem Nasenpunkt entspricht. Die Skelettlinienkrümmung ist im Rahmen der Erfindung definiert als die zweite Ableitung der Funktion der Skelettlinie. Die maximale Profildicke bzw. im Rahmen der Erfindung auch relative Profildicke genannt, ist die maximale Dicke eines Profils senkrecht zur Sehne bezogen auf die Sehnenlänge. Die relative Dickenrücklage ist im Rahmen der Erfindung definiert als Abstand der maximalen Profildicke von dem vorderen Nasenpunkt bezogen auf die Sehnenlänge, also auch in Prozent angegeben. Die Hinterkantendicke ist im Rahmen der Erfindung definiert als Dicke der Hinterkante bezogen auf die Sehnenlänge.

Vorzugsweise ist die zweite Ableitung der Skelettlinie (Skelettlinienkrümmung) von 10 % bis 40 %, insbesondere von 5 % bis 50 %, insbesondere von 2 % bis 60 %, der Profiltiefe entweder 0 oder positiv. Dieses Profil hat auch eigenen erfinderischen Gehalt.

Besonders gute aerodynamische Eigenschaften hat ein erfindungsgemäßes Profil, wenn das Profil eine relative Profildicke von mehr als 55 % oder gleich 55 % aufweist, wobei die Dickenrücklage kleiner als 35 % ist. Dieses Profil eignet sich insbesondere für rotorblattwurzelseitige Profile.

Ein erfindungsgemäßes und bevorzugtes Profil, das auch eigenen erfinderischen Gehalt hat, ist dadurch gekennzeichnet, dass das Profil eine relative Profildicke von mehr als 45 %, insbesondere mehr als 50 % oder gleich 50 %, aufweist, wobei bei turbulenter Umströmung eine Gleitzahl größer als 6, insbesondere größer als 10, insbesondere größer als 15, erreicht wird. Bei Verwendung dieses Profils im Blattwurzel nahen Bereich des Rotorblattes wird trotz der hohen relativen Profildicken von mehr als 45% auch ohne extreme Blatttiefe die in der Anströmung enthaltene Energie effizient ausgenutzt. Dieser Effekt wird auch weitestgehend mit verschmutzten Profilen erreicht, also bei komplett turbulenter Umströmung der Profile. Außerdem sind die vorgenannten Profile und auch die folgenden dahingehend entwickelt worden, dass der Arbeitsbereich bei hohen aerodynamischen Anstellwinkeln, beispielsweise > 10° liegt.

Hierdurch wird eine produktionstechnisch ungünstige hohe geometrische Blattverwindung vermieden. Vorzugsweise ist die relative Profildicke größer als 65 %, insbesondere größer oder gleich 70 %.

Ein besonders bevorzugtes Profil eines Rotorblatts einer Windenergieanlage, das eigenständigen erfinderischen Gehalt aufweist, ist dadurch gekennzeichnet, dass das Profil eine relative Profildicke von mehr als 45 % bei einer Dickenrücklage von weniger als 50 % aufweist, wobei ein Auftriebsbeiwert bei turbulenter Umströmung von mehr als 0,9, insbesondere mehr als 1,4, erreicht wird.

Vorzugsweise liegt die relative Profildicke bei mehr als 65 %, insbesondere größer oder gleich 70%. Vorzugsweise werden die Auftriebsbeiwerte bei Auslegungsanströmwinkeln- bzw. Anstellwinkeln von 6° bis 15°, insbesondere 8° bis 14°, erreicht.

Ein weiteres besonders bevorzugtes Profil, das eigenständigen erfinderischen Gehalt aufweist, sieht einen Nasenradius vor, der größer als 18 % der Profiltiefe ist, wobei das Profil im Nasenbereich asymmetrisch ist.

Vorzugsweise wird ein Verhältnis des maximalen Auftriebsbeiwertes bei turbulenter Umströmung zu dem maximalen Auftriebsbeiwert bei laminarer Umströmung von mehr als 0,75 erreicht.

Vorzugsweise weist die Saugseite und die Druckseite des Profils im hinteren Bereich jeweils wenigstens abschnittsweise eine konkave Kontur auf. Hierdurch kommen deutlich kleinere Übergeschwindigkeiten auf der Saugseite zustande, während auf der Druckseite ein deutlicher Anteil des Gesamtauftriebs des Profils erzeugt wird, durch ein so genanntes "rear loading".

Vorzugsweise ist eine Mehrzahl von erfindungsgemäßen Profilen vorgesehen, die in wenigstens einem Bereich eines Rotorblatts einer Windenergieanlage realisiert sind.

Ferner ist vorzugsweise ein Rotorblatt einer Windenergieanlage mit einer Mehrzahl erfindungsgemäßer Profile versehen. Insbesondere vorzugsweise ist die Mehrzahl von Profilen in einem Übergangsbereich des Rotorblatts in der Nähe der Blattwurzel angeordnet.

Im Rahmen der Erfindung wird eine turbulente Strömung bzw. Profilumströmung dann als vorliegend angesehen, wenn der aerodynamisch sauber definierte Umschlag der Strömung von laminar nach turbulent vorliegt. Eine turbulente Umströmung ist im Rahmen der Erfindung insbesondere ein Strömungszustand, bei dem mehr als 90%, insbesondere mehr als 92%, der Oberfläche eine turbulente Grenzschicht aufweisen. Dieses wird im Versuch und auch bei den folgenden dargestellten Messungen durch Rauigkeiten simuliert, die gerade groß genug sind, um einen Umschlag von laminarer Grenzschicht zu turbulenter Grenzschicht zu bewirken. Hierzu wird beispielsweise ein Zackenband an der Saugseite bei 5% vom Nasenpunkt und auf der Druckseite bei 10% vom Nasenpunkt, manchmal auch bei 5% (Saugseite) und 5% (Druckseite) bzw. 3%/5% oder 3%/3% realisiert. Die genaue Lage des Zackenbandes hängt hierbei vom Nasenradius ab und dem zu vermessenden Anstellwinkel.

Ein Vorteil der erfindungsgemäßen Profile liegt in den hohen Auftriebsbeiwerten, sowohl im sauberen als auch im verschmutzten Zustand, also bei laminarer als auch bei turbulenter Strömung. Ein weiterer Vorteil liegt darin, dass die Arbeitspunkte der erfindungsgemäßen Profile bei hohen aerodynamischen Anstellwinkeln liegen, wodurch die geometrische Verwindung des gesamten Rotorblattes deutlich verringert werden kann, was ein großer Vorteil in der Produktion ist und auch zu niedrigeren Rotorblattgewichten führt. Es kann auch vorkommen, dass die maximale Blattverwindung produktionstechnisch fest vorgegeben ist, so dass mit den erfindungsgemäßen Profilen in der Nähe der Blattwurzel erreicht wird, dass diese noch im optimalen Arbeitspunkt eingesetzt werden können, was bei den bisher bekannten Profilen in dem rotorblattwurzelnahen Bereich nicht möglich ist. Bei den erfindungsgemäßen Profilen können so mit bekannten Profilen in der Blattspitze Anstellwinkel vorherrschen, bei denen ein optimaler Auftrieb erzeugt wird und gleichzeitig andere Anstellwinkel in der Nähe der Blattwurzel vorherrschen, die für die Profile dort noch einen optimalen oder zumindest noch akzeptablen Auftrieb erzeugen.

Ein weiterer Vorteil liegt in der genau auf einen guten Straak innerhalb des Rotorblattes ausgelegten Dickenrücklage. Dieses ermöglicht einen maximalen Hauptgurtabstand im Bereich von relativen Profildicken von 35% bis zum Zylinder (an der Rotorblattwurzel) bei möglichst geringen Krümmungen im Nasen- und Hinterkantengurt.

Insbesondere von Vorteil sind die im Vergleich weit vorne liegende maximale Profildicke und/oder der relativ große Nasenradius.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Sie zeigen:
- Fig. 1: eine schematische Darstellung eines Rotorblattes mit eingeschriebenen Profilen,
- Fig. 2: ein erfindungsgemäßes Profil im Vergleich zu einem Profil des Standes der Technik,
- Fig. 3: ein weiteres erfindungsgemäßes Profil im Vergleich zu einem weiteren Profil des Standes der Technik,
- Fig. 4: ein Profil des Standes der Technik im Vergleich zu drei erfindungsgemäßen Profilen,
- Fig. 5: ein schematisches Diagramm betreffend berechnete Profilpolaren eines erfindungsgemäßen Profils,
- Fig. 6: ein schematisches Diagramm betreffend berechnete Profilpolaren eines Profils des Standes der Technik,
- Fig. 7: ein schematisches Diagramm gemessener Profilpolaren eines Profils gemäß der Erfindung und
- Fig. 8: ein schematisches Diagramm gemessener Profilpolaren eines Profils des Standes der Technik.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

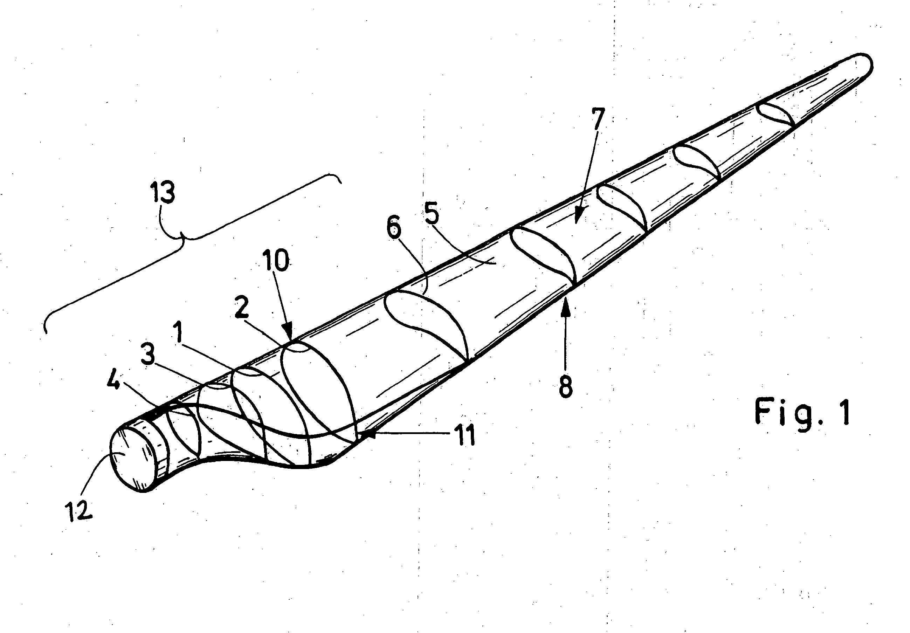

Fig. 1 zeigt schematisch ein Rotorblatt 5 einer Windenergieanlage, die nicht dargestellt ist, wobei schematisch schon einige Profile 1-4 sowie 6 eingezeichnet sind.

In einem Übergangsbereich 13 in der Nähe einer Rotorblattwurzel 12 sind erfindungsgemäße Profile 1-4 vorgesehen. Der Übergangsbereich 13 kann sich beispielsweise dadurch auszeichnen, dass die Hinterkante 11 nicht mehr wie bei den weiteren Profilen 6 vorgesehen spitz ausläuft, sondern stumpf ausgebildet ist, und zwar beispielsweise umso stumpfer je näher die Profile zur Rotorblattwurzel 12 gelangen. Zur besseren Veranschaulichung ist auch die Vorderkante 10 angedeutet und eine Oberseite bzw. Saugseite 7 und eine Unterseite bzw. Druckseite 8. Von besonderem Interesse im Rahmen der Erfindung sind die Profile 1-4, die sich im Übergangsbereich 13 befinden. Diese Profile 1-4 sollen nun im Weiteren erläutert werden.

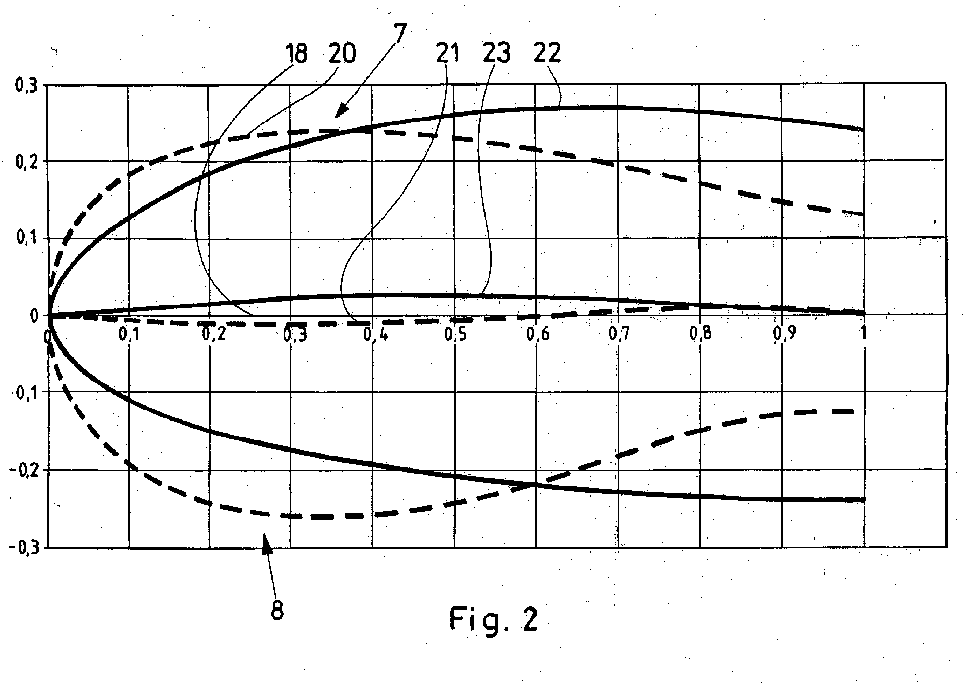

Fig. 2 zeigt ein erfindungsgemäßes Profil im Vergleich zu einem Profil des Standes der Technik. Das erfindungsgemäße Profil 20, das die Bezeichnung RE-W-50-B6 hat, weist eine im vorderen Profilbereich bis 60 % bzw. 0,6 der Sehnenlänge zur Druckseite 8 hin gekrümmte Skelettlinie 21 auf. Erst bei ca. 0,63 der Sehnenlänge schneidet die Skelettlinie 21 die Sehne 18 und geht in Richtung der Saugseite 7. Außerdem liegt im Vergleich zum Profil FX 83-W-500 (siehe Althaus, a.a.O., Seite 552, 553), das die Bezugsziffer 22 trägt, die maximale Profildicke relativ weit vorne. Bei dem Profil 20 liegt diese bei 34,4 % bzw. 0,344 der Profiltiefe bzw. Sehnenlänge. Die bekannten Profile, die in dem vorne angegebenen Dokument von Althaus genannt sind, haben Dickenrücklagen von 37,4 % bis 78,7 %.

Auch der Nasenradius des Profils 20 ist mit 23,3 % der Profiltiefe deutlich größer als die Vergleichsprofile mit Werten zwischen 5,6 % bis 14,8%, wobei hier zu berücksichtigen ist, dass das Profil im Bereich der Nase auch asymmetrisch ist. Das Vergleichsprofil 22, nämlich das FX 83-W-500, hat auch eine Skelettlinie 23, die vollständig oberhalb der Sehne 18 zur Saugseite 7 hin angeordnet ist. Die relative Profildicke des Profils 22 liegt bei 50 %. Diese liegt bei einer Profiltiefe von 78,7 %. Es liegt eine maximale Wölbung von 0,02539 vor bei einer Profiltiefe von 52,7 %. Der Nasenradius beträgt 0,056 bzw. 5,6 %. Es liegt eine Profilquerschnittsfläche von 0,4134 vor und eine Hinterkantendicke von 0,479 % bzw. 47,9 %. Das erfindungsgemäße Profil 20 weist eine relative Profildicke von 50 % bei einer Profiltiefe von 34,4 % und einer maximalen Wölbung von 0,0123 auf. Die maximale Wölbung liegt bei einer Profiltiefe von 82,5 %. Der Nasenradius beträgt 23,3 %, die Profilquerschnittsfläche 0,3927 und die Hinterkantendicke liegt bei 25,7 %. Es ist zu erkennen, dass insbesondere auf der Druckseite 8 im hinteren Bereich des Profils eine konkave Kontur des Profils gegeben ist. Diese ist auch auf der Saugseite 7 gegeben, allerdings nicht so stark und prominent ausgeprägt wie auf der Druckseite 8. Die Kontur des Profils 22 gemäß dem Stand der Technik ist im hinteren Bereich hingegen konvex.

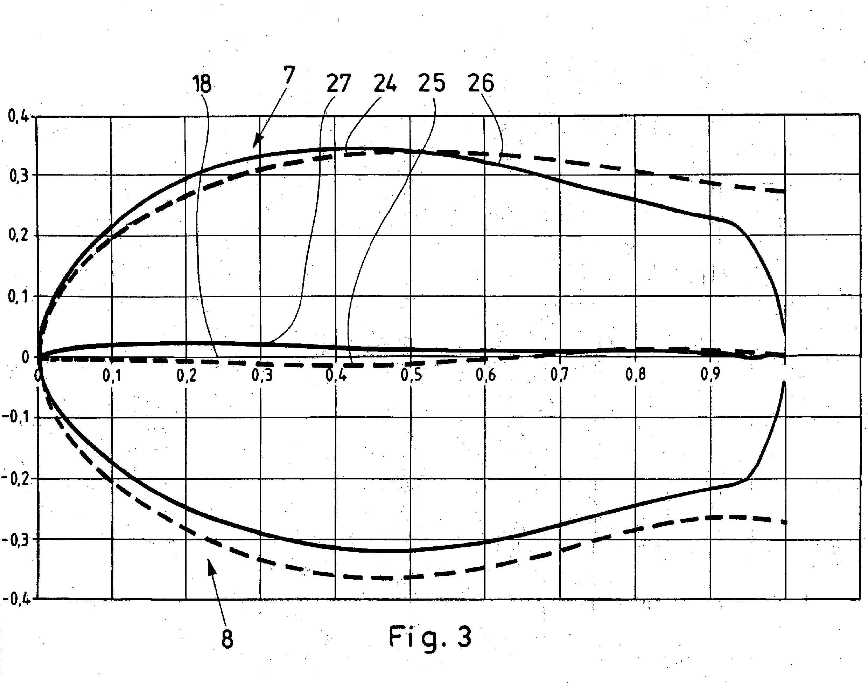

In Fig. 3 ist wieder ein erfindungsgemäßes Profil, nämlich das Profil RE-W-70-B9, gegenüber einem Profil des Standes der Technik, nämlich dem Profil FX 79-W-660A, dargestellt. Es sind auch die zugehörigen Skelettlinien 25 und 27 dargestellt. Auch in diesem Fall ist die Skelettlinie 25 des RE-W-70-B9 unterhalb der Sehne 18 zur Druckseite 8 angeordnet und die Skelettlinie 27 des FX 79-W-660A des Standes der Technik oberhalb der Sehne 18 zur Saugseite 7 hin angeordnet. Das erfindungsgemäße Profil 24 weist eine relative Profildicke von 70 % auf bei einer Profiltiefe von 47,7 %. Es ist eine minimale bzw. betragsmäßig maximale Wölbung von -0,014 bei einer Profiltiefe von 39,9 % vorgesehen. Die maximale positive Wölbung beträgt 0,0118 bei 85 % Profiltiefe. Der Nasenradius beträgt 23,87 %.

Bei dem Profil 26 gemäß dem Stand der Technik liegt eine relative Profildicke von 66,4 % bei einer Profiltiefe von 46,7 % vor. Es liegt eine maximale Wölbung von 2,2 % vor bei einer Profiltiefe von 17,1 %. Der Nasenradius beträgt 4,1 %.

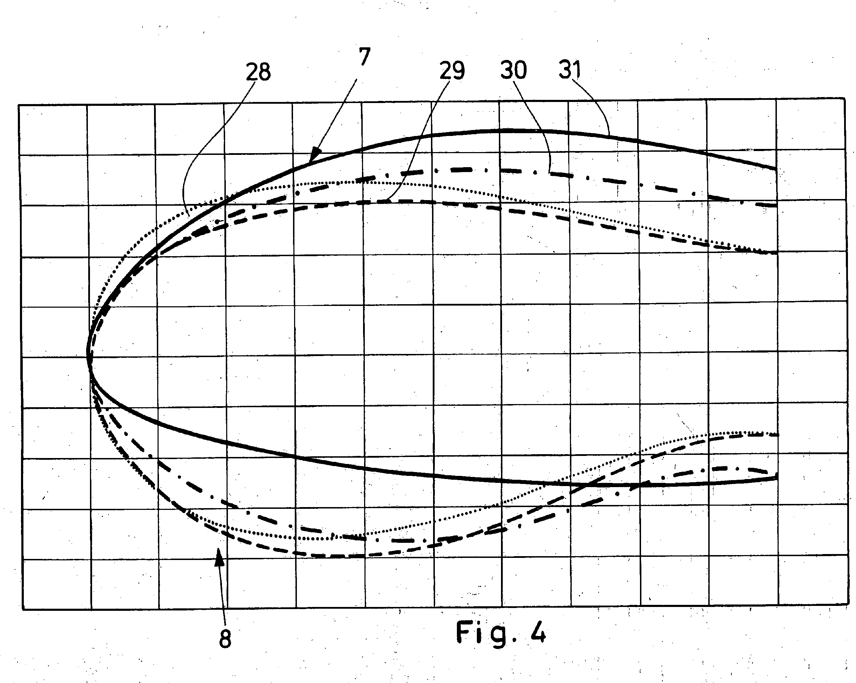

Fig. 4 zeigt vier weitere Profile eines Rotorblatts 5 einer Windenergieanlage, wobei die Profile 28, 29 und 30 erfindungsgemäße Profile sind und ein Profil, nämlich das Profil 31, ein Profil des Standes der Technik ist.

Das Profil 31 entspricht dem FX 77-W-700 aus dem Stand der Technik. Dieses ist beispielsweise anhand des Dokuments Dieter Althaus "Niedriggeschwindigkeitsprofile", das oben angegeben ist, so zu realisieren, dass das Profil FX 77-W-500, das auf Seiten 162 und 163 angegeben ist, hinten weiter abgeschnitten wird, und zwar so, dass eine relative Dicke bzw. relative Profildicke von 70 % entsteht. Diese liegt dann naturgemäß bei einer relativ weit hinten liegenden Profiltiefe, in diesem Fall bei ungefähr 68 %.

Die erfindungsgemäßen Profile 28 entsprechend dem RE-W-70-A1, 29 entsprechend dem RE-W-70-A2 und 30 entsprechend RE-W-70-B1 haben auch eine relative Profildicke von 70 % bei einer Dickenrücklage von ca. 34 % für das Profil 28, ca. 37 % für das Profil 29 und ca. 50 % für das Profil 30. Auch hier ist bei den erfindungsgemäßen Profilen 28 bis 30 zu erkennen, dass zur Hinterkante des Profils konkave Konturen vorgesehen sind, die insbesondere auf der Druckseite 8 stärker ausgeprägt sind.

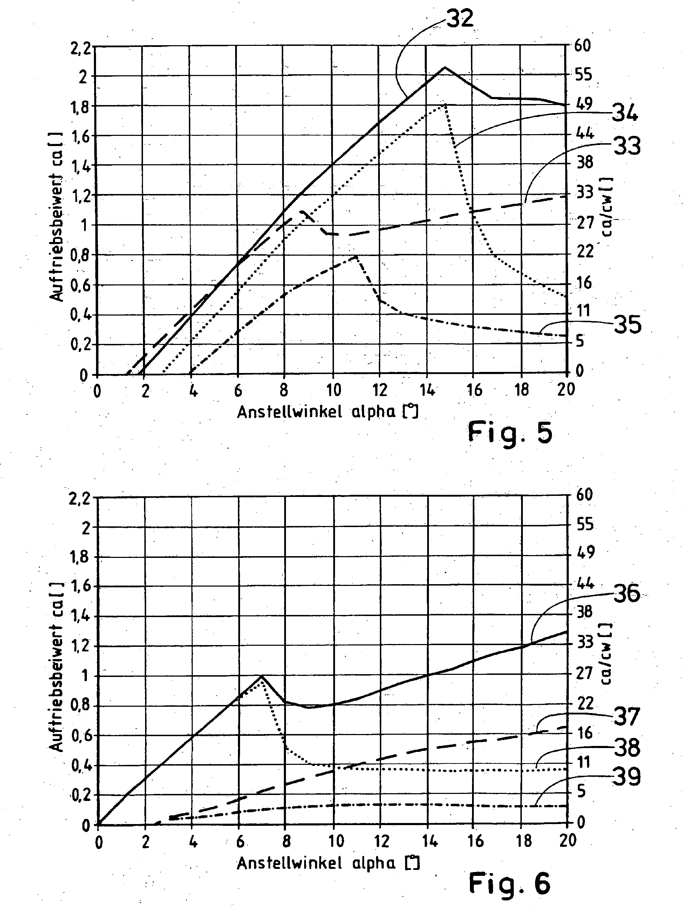

Fig. 5 zeigt ein schematisches Diagramm betreffend berechneter Profilpolaren eines erfindungsgemäßen Profils, nämlich des RE-W-70-B9. Es ist der Auftriebsbeiwert cₐ über dem Anstellwinkel α (alpha) dargestellt und das Verhältnis des Auftriebsbeiwertes zum Widerstandsbeiwert c_{w}. Bei diesem Verhältnis handelt es sich um die Gleitzahl. Bei den. Polaren der Fig. 5 handelt es sich um eine Berechnung der Profilpolaren für eine Reynoldszahl von 3 Mio. Es wurden entsprechende Rechnungen für eine turbulente Umströmung und eine laminare Umströmung vorgenommen. Die Profilpolare 32 stellt eine Berechnung des Auftriebsbeiwertes ca bei laminarer Umströmung und die Profilpolare 33 den entsprechenden Wert bei turbulenter Umströmung dar. Die Profilpolare für die Gleitzahl bei laminarer Umströmung ist mit der Bezugsziffer 34 versehen und entsprechend bei turbulenter Umströmung mit der Bezugsziffer 35. Es ist zu erkennen, dass der Auftriebsbeiwert ein Maximum bei ca. 14,8° des Anstellwinkels aufweist, und zwar bei laminarer Umströmung, und ein Maximum bei ca. 9° bei turbulenter Umströmung. Die Gleitzahl ist bei laminarer Umströmung auch bei ca. 14,8° mit einem Maximum versehen und bei turbulenter Umströmung bei ca. 11 °.

Im Vergleich zu den entsprechenden Profilpolaren eines erfindungsgemäßen Profils gemäß Fig. 5 sind in Fig. 6 die entsprechenden Profilpolaren 36, 37, 38 und 39 eines bekannten Profils, nämlich des FW 79-W-660 A angegeben. Es ist insbesondere zu erkennen, dass ein lokales Maximum des Auftriebsbeiwertes bei laminarer Umströmung bei der Profilpolaren 36 bei ungefähr 7° gegeben ist und bei einer Profilpolaren betreffend die Gleitzahl bei laminarer Umströmung, die mit der Bezugsziffer 38 versehen ist, auch ein entsprechendes Maximum bei 7° des Anstellwinkels α vorliegt.

Bei turbulenter Umströmung ist durch die Profilpolare 37, die auch den Auftriebsbeiwert cₐ betrifft, klar zu erkennen, dass der Auftrieb deutlich minimiert ist. Entsprechendes gilt auch für die Profilpolare 39 betreffend die Gleitzahl bei turbulenter Umströmung.

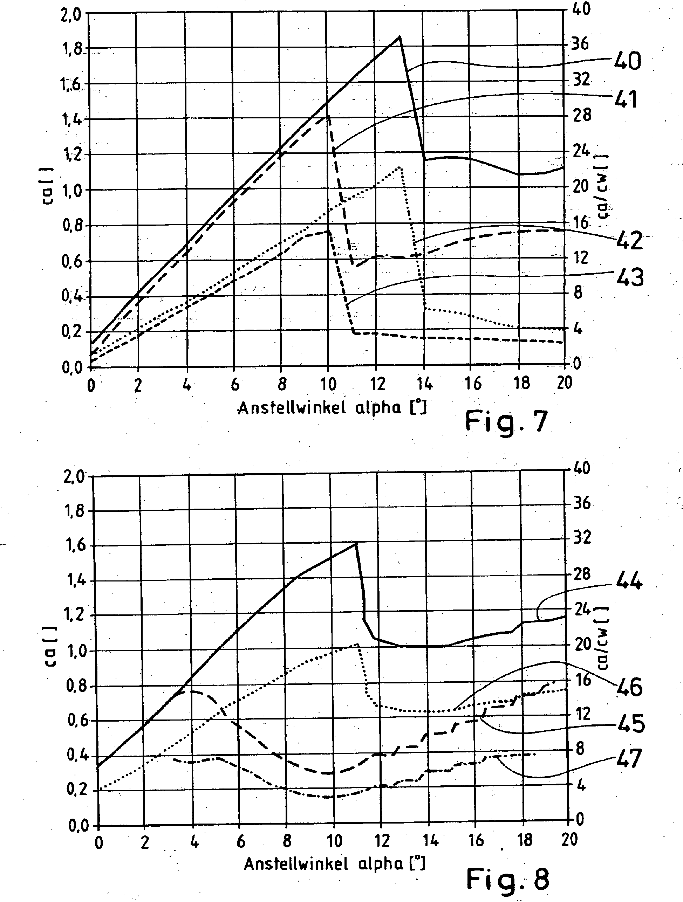

Fig. 7 zeigt ein schematisches Diagramm gemessener Profilpolaren eines Profils gemäß der Erfindung, nämlich des Profils RE-W-50-B6, das in der Fig. 2 schon dargestellt wurde. Die Profilpolare 40 stellt den Auftriebsbeiwert bei laminarer Umströmung bei einer Reynoldszahl von 3 Mio. dar. Es wird ein maximaler Auftriebsbeiwert von ca. 1,84 bei einem Winkel von ca. 13° erreicht.

Gut zu erkennen ist, dass auch bei turbulenter Umströmung gemäß den Profilpolaren 41 der Auftriebsbeiwert sich nur gering verringert. Es ist ein Maximum von 1,4 bei einem Anstell- bzw. Anströmwinkel α von ca. 10° gegeben. Die Reynoldszahl hier betrug bei der Messung 3,1 Mio. Die Profilpolare 42 betreffend die Gleitzahl (cₐ/c_{w}) bei laminarer Umströmung hat ein Maximum im Anstellwinkel von ca. 13°. Der Quotient ist hier ca. 22. Bei turbulenter Umströmung verringert sich die maximale Gleitzahl gemäß der Profilpolare 43 auf 15,5 bei einem Anstellwinkel von ca. 10°.

Zum Vergleich ist ein entsprechendes schematisches Diagramm in Fig. 8 gezeigt, das gemessene Profilpolaren eines Profils des Standes der Technik, nämlich des Profils FX 77-W-500, darstellt. Im Vergleich zu den Profilpolaren des Auftriebsbeiwertes cₐ 44 bei laminarer Umströmung und der Profilpolare 46 betreffend die Gleitzahl bei laminarer Umströmung, die an sich schon schlechtere Werte als gemäß der Erfindung bei laminarer Umströmung aufweisen, brechen die Profilpolaren bei turbulenter Umströmung vollständig zusammen. So ist hier auch der gemessene Profilpolare für den Auftriebsbeiwert cₐ bei turbulenter Umströmung mit 45 gekennzeichnet und die entsprechende gemessene Profilpolare 47 betreffend die Gleitzahl auch für turbulente Umströmung dargestellt.

### Bezugszeichenliste

- 1 - 4: Profil
- 5: Rotorblatt
- 6: Profil
- 7: Saugseite
- 8: Druckseite
- 10: Vorderkante
- 11: Hinterkante
- 12: Blattwurzel
- 13: Übergangsbereich
- 18: Sehne
- 20: Profil RE-W-50-B6
- 21: Skelettlinie des RE-W-50-B6
- 22: Profil FX 83-W-500
- 23: Skelettlinie des FX 83-W-500
- 24: Profil RE-W-70-B9
- 25: Skelettlinie des RE-W-70-B9
- 26: Profil FX 79-W-660 A
- 27: Skelettlinie des FX 79-W-660A
- 28: Profil RE-W-70-A1
- 29: Profil RE-W-70-A2
- 30: Profil RE-W-70-B1
- 31: Profil FX 77-W-700
- 32: Profilpolare cₐ laminar
- 33: Profilpolare cₐ turbulent
- 34: Profilpolare cₐ/c_{w} laminar
- 35: Profilpolare cₐ/c_{w} turbulent
- 36: Profilpolare cₐ laminar
- 37: Profilpolare cₐ turbulent
- 38: Profilpolare cₐ/c_{w} laminar
- 39: Profilpolare cₐ/c_{w} turbulent
- 40: Profilpolare cₐ laminar
- 41: Profilpolare cₐ turbulent
- 42: Profilpolare cₐ/c_{w} laminar
- 43: Profilpolare cₐ/c_{w} turbulent
- 44: Profilpolare cₐ laminar
- 45: Profilpolare cₐ turbulent
- 46: Profilpolare cₐ/c_{w} laminar
- 47: Profilpolare cₐ/c_{w} turbulent

## Patentansprüche

1. Profil (1-4) eines Rotorblatts (5) einer Windenergieanlage mit einer Oberseite (Saugseite) (7) und einer Unterseite (Druckseite) (8) mit einer Skelettlinie (21, 25) und einer Sehne (18) zwischen der Vorderkante (10) und der Hinterkante (11) des Profils (1-4), wobei die Skelettlinie (21, 25) wenigstens abschnittsweise unterhalb der Sehne (18) in Richtung der Druckseite (8) verläuft, wobei die Skelettlinie (21, 25) in einem Abschnitt zwischen 0 % bis 60 % der Profiltiefe des Profils (1-4) unterhalb der Sehne (18) angeordnet ist, **dadurch gekennzeichnet, dass** die Skelettlinie (21, 25) vollständig in einem Abschnitt zwischen 5 % bis 50 %, insbesondere 2 % bis 60 %, unterhalb der Sehne (18) angeordnet ist, wobei das Profil (1-4) eine relative Profildicke von mehr als 49% aufweist, wobei die Dickenrücklage kleiner als 35% ist.

2. Profil (1-4) nach Anspruch 1, **dadurch gekennzeichnet, dass** der Betrag der maximalen Wölbung kleiner als 1,5% ist.

3. Profil (1-4) nach Anspruch 1 oder 2, **dadurch gekennzeichnet, dass** die zweite Ableitung der Skelettlinie (21, 25) (Skelettlinienkrümmung) von 10 % bis 40 %, insbesondere von 5 % bis 50%, insbesondere von 2 % bis 60 %, der Profiltiefe entweder 0 oder positiv ist.

4. Profil (1-4) nach einem der Ansprüche 1 bis 3, **dadurch gekennzeichnet, dass** das Profil (1-4) eine relative Profildicke von mehr als 55 % oder gleich 55 %, aufweist, wobei die Dickenrücklage kleiner als 35 % ist.

5. Profil (1-4) nach einem der Ansprüche 1 bis 4, **dadurch gekennzeichnet, dass** das Profil (1-4) eine relative Profildicke von mehr als 49 %, insbesondere mehr als 50 % oder gleich 50 %, aufweist, wobei bei turbulenter Umströmung eine Gleitzahl größer als 6, insbesondere größer als 10, insbesondere größer als 15, erreicht wird.

6. Profil (1-4) nach einem der Ansprüche 1 bis 5, **dadurch gekennzeichnet, dass** das Profil (1-4) eine relative Profildicke von mehr als 49 % bei einer Dickenrücklage von weniger als 35 % aufweist, wobei ein Auftriebsbeiwert (ca) bei turbulenter Um-strömung von mehr als 0,9, insbesondere mehr als 1,4, erreicht wird.

7. Profil (1-4) nach Anspruch 5 oder 6, **dadurch gekennzeichnet, dass** die relative Profildicke bei mehr als 65 % liegt, insbesondere größer oder gleich 70 % ist.

8. Profil (1-4) nach Anspruch 6 oder 7, **dadurch gekennzeichnet, dass** die Auftriebsbeiwerte bei Anstellwinkeln von 6° bis 15°, insbesondere 8° bis 14°, erreicht werden.

9. Profil (1-4) nach einem der Ansprüche 1 bis 8, **dadurch gekennzeichnet, dass** ein Nasenradius vorgesehen ist, der größer als 18 % der Profiltiefe ist, wobei das Profil (1-4) im Nasenbereich asymmetrisch ist.

10. Profil (1-4) nach einem der Ansprüche 1 bis 9, **dadurch gekennzeichnet, dass** ein Verhältnis des maximalen Auftriebsbeiwertes (ca) bei turbulenter Umströmung zu dem maximalen Auftriebsbeiwert (ca) bei laminarer Umströmung von mehr als 0,75 erreicht wird.

11. Profil (1-4) nach einem der Ansprüche 1 bis 10, **dadurch gekennzeichnet, dass** die Saugseite (7) und die Druckseite (8) des Profils (1-4) im hinteren Bereich jeweils wenigstens abschnittsweise eine konkave Kontur aufweisen.

12. Mehrzahl von Profilen (1-4) nach einem der Ansprüche 1 bis 11, die in wenigstens einem Bereich eines Rotorblatts (5) einer Windenergieanlage realisiert sind.

13. Rotorblatt (5) einer Windenergieanlage mit einer Mehrzahl von Profilen (1-4) nach Anspruch 12, wobei insbesondere die Mehrzahl von Profilen (1-4) in einem Übergangsbereich (13) des Rotorblatts (5) in der Nähe der Blattwurzel (12) angeordnet ist.

## Claims

1. Profile (1-4) of a rotor blade (5) of a wind turbine with an upper side (suction side) (7) and a lower side (pressure side) (8) with a skeleton line (21, 25) and a chord (18) between the leading edge (10) and trailing edge (11) of the profile (1-4), wherein the skeleton line (21, 25) extends, at least in sections, below the chord (18) in the direction of the pressure side (8), wherein the skeleton line (21, 25) is arranged in one section between 0% to 60% of the profile depth of the profile (1-4) below the chord (18), **characterised in that** the skeleton line (21, 25) is arranged completely in one section between 5% to 50%, particularly 2% to 60%, below the chord (18), whereby the profile (1-4) has a relative profile thickness of more than 49%, wherein the location of the maximum thickness as a fraction of the chord is smaller than 35%.

2. Profile (1-4) as claimed in claim 1, **characterised in that** the magnitude of the maximum curvature is less than 1.5%.

3. Profile (1-4) as claimed in claim 1 or 2, **characterised in that** the second derivative of the skeleton line (21, 25) (skeleton line curvature) from 10% to 40%, particularly from 5% to 50%, particularly from 2% to 60%, of the profile depth is either 0 or positive.

4. Profile (1-4) as claimed in one of claims 1 to 3, **characterised in that** profile (1-4) has a relative profile thickness of more than 55% or equal to 55%, whereby the location of the maximum thickness as a fraction of the chord is smaller than 35%.

5. Profile (1-4) as claimed in one of claims 1 to 4, **characterised in that** profile (1-4) has a relative profile thickness of more than 49%, particularly more than 50% or equal to 50%, wherein under turbulent flow a lift-drag ratio of greater than 6, particularly greater than 10, particularly greater than 15, is achieved.

6. Profile (1-4) as claimed in one of claims 1 to 5, **characterised in that** the profile (1-4) has a relative profile thickness or more than 49% at a location of the maximum thickness as a fraction of the chord of less than 35%, wherein a lift coefficient (ca) under turbulent flow of more than 0.9, particularly more than 1.4, is achieved.

7. Profile (1-4) as claimed in claim 5 or 6, **characterised in that** the relative profile thickness is more than 65%, particularly more than or equal to 70%.

8. Profile (1-4) as claimed in claim 6 or 7, **characterised in that** the lift coefficients are achieved at angles of attack of 6° to 15°, particularly 8° to 14°.

9. Profile (1-4) as claimed in one of claims 1 to 8, **characterised in that** a nose radius is provided which is greater than 18% of the profile depth, wherein the profile (1-4) is asymmetrical in the nose region.

10. Profile (1-4) as claimed in one of claims 1 to 9, **characterised in that** a ratio of the maximum lift coefficient (ca) at turbulent flow to the maximum lift coefficient (ca) under laminar flow of more than 0.75 is achieved.

11. Profile (1-4) as claimed in one of claims 1 to 10, **characterised in that** the suction side (7) and the pressure side (8) of the profile (1-4) each have, at least in sections, a concave contour in the trailing region.

12. A plurality of profiles (1-4) as claimed in one of claims 1 to 11, which are implemented in at least one region of a rotor blade (5) of a wind turbine.

13. A rotor blade (5) of a wind turbine with a plurality of profiles (1-4) as claimed in claim 12, wherein, in particular, the plurality of profiles (1-4) is arranged in a transition region (13) of the rotor blade (5) in the vicinity of the blade root (12).

## Revendications

1. Profil (1 à 4) d'une pale de rotor (5) d'une éolienne, comprenant un côté supérieur (côté d'aspiration) (7) et un côté inférieur (côté de pression) (8) comportant une cambrure (21, 25) et une corde (18) entre le bord d'attaque (10) et le bord de fuite (11) du profil (1 à 4), dans lequel la cambrure (21, 25) s'étend au moins en partie au-dessous de la corde (18) dans la direction du côté de pression (8), la cambrure (21, 25) étant disposée en dessous de la corde (18) en une portion comprise entre 0% et 60% de la longueur de la corde du profil (1 à 4), **caractérisé en ce que** la cambrure (21, 25) est disposée en une portion comprise entre 5% et 50%, en particulier entre 2% et 60%, en dessous de la corde (18), le profil (1 à 4) présentant une épaisseur de profil relative de plus de 49%, la distance entre l'épaisseur maximale du profil et le bord d'attaque étant inférieure à 35% de la longueur du profil.

2. Profit (1 à 4) selon la revendication 1, **caractérisé en ce que** la cambrure maximale est inférieure à 1,5%.

3. Profil (1 à 4) selon la revendication 1 ou la revendication 2, **caractérisé en ce que** la dérivée seconde de la cambrure (21, 25) (courbure de la ligne de cambrure) est égale à 0 ou est positive sur 10% à 40%, en particulier 5% à 50%, en particulier 2% à 60 % de la longueur de la corde du profil.

4. Profil (1 à 4) selon l'une quelconque des revendications 1 à 3, **caractérisé en ce que** le profil (1 à 4) a une épaisseur de profil relative de plus de 55% ou égale à 55%, la distance entre l'épaisseur maximale du profil et le bord d'attaque étant inférieure à 35% de la longueur du profil.

5. Profil (1 à 4) selon l'une quelconque des revendications 1 à 4, **caractérisé en ce que** le profil (1 à 4) a une épaisseur de profil relative de plus de 49%, en particulier de plus de 50% ou égale à 50%, ce par quoi il est obtenu, pour un écoulement turbulent, une finesse supérieure à 6, en particulier supérieure à 10, en particulier supérieur à 15.

6. Profil (1 à 4) selon l'une quelconque des revendications 1 à 5, **caractérisé en ce que** le profil (1 à 4) présente une épaisseur de profil relative de plus de 49% et a une distance entre l'épaisseur maximale du profil et le bord d'attaque inférieure à 35% de la longueur du profil, ce par quoi il est obtenu un coefficient de portance (ca), avec un écoulement turbulent, de plus de 0,9, en particulier de plus de 1,4.

7. Profil (1 à 4) selon la revendication 5 ou la revendication 6, **caractérisé en ce que** l'épaisseur de profil relative est supérieure à 65%, en particulier supérieure ou égale à 70%.

8. Profil (1 à 4) selon la revendication 6 ou la revendication 7, **caractérisé en ce que** les coefficients de portance sont obtenus avec des angles de 6° à 15°, en particulier de 8° à 14°.

9. Profil (1 à 4) selon l'une quelconque des revendications 1 à 8, **caractérisé en ce qu'**un cylindre du bord d'attaque est prévu qui est supérieur à 18% de la longueur du profil, ce par quoi le profil (1 à 4) est asymétrique dans la partie du nez.

10. Profil (1 à 4) selon l'une quelconque des revendications 1 à 9, **caractérisé en ce qu'**un rapport de plus de 0,75 est obtenu entre le coefficient de portance maximal (ca) avec un écoulement turbulent et le coefficient de portance maximal (ca) avec un écoulement laminaire.

11. Profil (1 à 4) selon l'une quelconque des revendications 1 à 10, **caractérisé en ce que** le côté d'aspiration (7) et le côté de pression (8) du profil (1 à 4), dans la zone arrière, comportent chacun au moins plusieurs sections présentant une forme concave.

12. Pluralité de profils (1 à 4) selon l'une quelconque des revendications 1 à 11, réalisée dans au moins une partie d'une pale de rotor (5) d'une éolienne.

13. Pale de rotor (5) d'une éolienne comprenant une pluralité de profils (1 à 4) selon la revendication 12, dans laquelle en particulier la pluralité de profils (1 à 4) est disposée dans une zone de transition (13) de la pale de rotor (5) à proximité de la racine de la pale de rotor (12).
